# EUROPÄISCHE PATENTANMELDUNG

(11) **EP 4 813 494 A1**
(43) Veröffentlichungstag der Anmeldung: **30.09.2026**
(21) Anmeldenummer: 26164334.0
(22) Anmeldetag: 12.03.2026
(51) Int. Cl.: B01D 33/04, B01D 33/048, B01D 33/056, B01D 33/073, B01D 33/37, B01D 33/46, B01D 33/80

(54) **EINRICHTUNG ZUM REINIGEN FLÜSSIGEN MEDIUMS MIT UNTERDRUCKBANDFILTERN**

(30) Priorität: 29.03.2025 DE 102025001325; 29.03.2025 DE 202025000940 U
(71) Anmelder: Leipoldt, Matthias, 08233 Treuen (DE)
(72) Erfinder: Leipoldt, Matthias, 08233 Treuen (DE)
(74) Vertreter: Kailuweit & Uhlemann Patentanwälte Partnerschaft mbB

(57) **Zusammenfassung**

Die Erfindung betrifft eine Einrichtung zum Reinigen flüssigen Mediums mit Unterdruckbandfiltern, wobei die Einrichtung einen Behälter, Baugruppen mit Filterbändern in Verbindung mit einer Vakuumpumpe besitzt, die Baugruppen jeweils Walzen aufweisen, die Baugruppen parallel oder überwiegend parallel und schräg beabstandet zueinander angeordnet sind und die in Richtung Boden des Behälters angeordneten ersten Walzen mit der Vakuumpumpe verbunden sind. Die Einrichtung zeichnet sich insbesondere dadurch aus, dass flüssiges Medium für einen weiteren Einsatz oder Verwendung einfach zu reinigen ist. Dazu überragen die Baugruppen die Oberfläche des zu reinigenden Mediums. Die über der Oberfläche des zu reinigenden Mediums angeordneten Walzen sind jeweils an Antriebe gekoppelt. Die Umlenkwalzen sind über Kettengetriebe mit Gelenkketten miteinander verbunden, wobei die Filterbänder der Baugruppen mit den Gelenkketten lösbar verbunden sind. Beabstandet zu den Enden der ersten Umlenkwalzen sind Rinnen angeordnet, wobei Schenkel benachbarter Rinnen über Platten miteinander verbunden sind. Weiterhin sind Kratzbleche mit den Gelenkketten verbunden.

## Beschreibung

Die Erfindung betrifft eine Einrichtung zum Reinigen flüssigen Mediums mit Unterdruckbandfiltern, wobei
- die Einrichtung einen Behälter zur Aufnahme des Mediums, Baugruppen mit Filterbändern als Unterdruckbandfilter und wenigstens eine Vakuumpumpe zur Erzeugung eines Unterdrucks besitzt,
- die Baugruppen jeweils in einer Reihe und beabstandet zueinander angeordneten Walzen zum Tragen des Filterbandes zwischen Trägern aufweisen,
   so dass das jeweilige umlaufende Filterband und die zugeordneten Träger einen Raum begrenzen,
- die Baugruppen parallel oder überwiegend parallel und schräg beabstandet zueinander angeordnet sind und
- die in Richtung Boden des Behälters angeordneten ersten Walzen als Umlenkwalzen und Hohlzylinder wenigstens bereichsweise Öffnungen in ihren Wandungen aufweisen und mit ihren Innenräumen mit der Vakuumpumpe verbunden sind.

Bei einem Unterdruckbandfilter, auch als Vakuumfilter bekannt, wird in einer Filterkammer mittels einer Vakuumpumpe ein Unterdruck erzeugt, so dass die zu reinigende Flüssigkeit durch das Filterband läuft, wobei Verunreinigungen auf dem Filterband verbleiben. Gereinigte Flüssigkeit wird mittels einer Fördereinrichtung abgepumpt.

Die Druckschrift DE 32 48 231 A1 offenbart eine Vakuumfilteranlage, welche mit einem endlosen Förderband versehen ist. Das Förderband ist durch zugfeste Gewebeeinlagen verstärkt und mit mindestens einer längs verlaufenden Lochreihe versehen.

Durch die Druckschrift DE 20 2018 001 403 U1 ist ein Unterdruckbandfilter zum Reinigen flüssigen Mediums bekannt, wobei der Unterdruckbandfilter einen Behälter, ein endloses Filterband und wenigstens eine Vakuumpumpe zur Erzeugung eines Unterdrucks besitzt. Dazu weist der Behälter zur Aufnahme des Mediums das geführte und den Querschnitt des Behälters überbrückende Filterband auf, wobei das Filterband auf einer in Reihe beabstandet zueinander angeordneter Walzen im Behälter zur Aufnahme des Mediums geführt ist. Zwischen dem auf den Walzen geführten Filterband ist ein Hohlraum für gereinigtes Medium vorhanden, der über einen gereinigtes Medium aufnehmenden Unterdruckbehälter in Verbindung mit der Vakuumpumpe und einer gereinigtes Medium fördernden Einrichtung verbunden ist. Weiterhin durchschneidet eine die Reihe von Walzen verlängernde Einheit mit weiteren das Filterband führenden Walzen die Oberfläche des zu reinigenden Mediums im Behälter. Das Unterdruckbandfilter besitzt ein im Behälter mäanderförmig geführtes Filterband.

Die Druckschrift DE 10 2019 003 210 A1 offenbart eine Einrichtung zum Reinigen flüssigen Mediums mit Unterdruckbandfiltern, wobei die Einrichtung einen Behälter zur Aufnahme des Mediums, Filterbänder und wenigstens eine Vakuumpumpe zur Erzeugung eines Unterdrucks besitzt. Dazu befinden sich im Behälter mehrere Träger mit jeweils einem Filterband. Die Träger weisen jeweils in einer Reihe und beabstandet zueinander angeordneten Walzen zum Tragen des Filterbandes zwischen Schienen auf, so dass das jeweilige umlaufende Filterband und die zugeordneten Schienen einen Raum begrenzen. Die Filterbänder sind parallel oder überwiegend parallel und schräg beabstandet zueinander im Behälter angeordnet. Die in Richtung Boden des Behälters angeordneten Walzen als Umlenkwalzen und Hohlzylinder weisen wenigstens bereichsweise Öffnungen in ihren Wandungen auf und sind mit ihren Innenräumen über einen gereinigtes Medium aufnehmenden Unterdruckbehälter in Verbindung mit einer Vakuumpumpe und einer gereinigtes Medium fördernden Einrichtung verbunden. Weiterhin durchschneidet wenigstens einer der Träger mit dem Filterband die Oberfläche des zu reinigenden Mediums im Behälter. Das Filterband weist mehrere Schichten auf, wobei eine erste Schicht ein Löcher aufweisendes bandförmiges Tragelement und wenigstens eine zweite Schicht ein Filtergewebe sind. Das bandförmige Tragelement besitzt Zahnriemen. Die Krafteinleitungen der Vorschubkräfte erfolgen über die Zahnriemen, so dass sich für die Filterbänder nicht unerhebliche Belastungen ergeben.

Der im Patentanspruch 1 angegebenen Erfindung liegt die Aufgabe zugrunde, flüssiges Medium für einen weiteren Einsatz oder Verwendung einfach zu reinigen.

Diese Aufgabe wird mit den im Patentanspruch 1 aufgeführten Merkmalen gelöst.

Die erfindungsgemäße Einrichtung zum Reinigen flüssigen Mediums mit Unterdruckbandfiltern, wobei
- die Einrichtung einen Behälter zur Aufnahme des zu reinigenden Mediums, Baugruppen mit Filterbändern als Unterdruckbandfilter und wenigstens eine Vakuumpumpe zur Erzeugung eines Unterdrucks besitzt,
- die Baugruppen jeweils in einer Reihe und beabstandet zueinander angeordneten Walzen zum Tragen des Filterbandes zwischen Trägern aufweisen,
   so dass das jeweilige umlaufende Filterband und die zugeordneten Träger einen Raum begrenzen,
- die Baugruppen parallel oder überwiegend parallel und schräg beabstandet zueinander angeordnet sind,
- die in Richtung Boden des Behälters angeordneten Walzen als erste Umlenkwalzen Hohlzylinder mit Öffnungen in ihren Wandungen sind und
- die Innenräume der ersten Umlenkwalzen als Hohlzylinder mit der Vakuumpumpe verbunden sind,
zeichnet sich insbesondere dadurch aus, dass flüssiges Medium für einen weiteren Einsatz oder Verwendung einfach zu reinigen ist.

Dazu überragen im Sinne der Erfindung die Baugruppen die Oberfläche des zu reinigenden Mediums im Behälter, so dass die einen Endenbereiche der Baugruppen die Oberfläche des zu reinigenden Mediums im Behälter überragen und die anderen Endenbereiche der Baugruppen im zu reinigenden Medium angeordnet sind. Die in Richtung vom zu reinigenden Medium weg weisenden und über der Oberfläche des zu reinigenden Mediums angeordneten Walzen als zweite Umlenkwalzen sind erfindungsgemäß jeweils an Antriebe als Bestandteile der Baugruppen gekoppelt, wobei die zweiten Umlenkwalzen und die Antriebe über der Oberfläche des zu reinigenden Mediums angeordnet sind. Die Umlenkwalzen sind im Sinne der Erfindung über Kettengetriebe mit Gelenkketten miteinander verbunden, wobei die Filterbänder der Baugruppen mit den Gelenkketten lösbar verbunden sind. Beabstandet zu den Enden der ersten Umlenkwalzen im zu reinigenden Medium Sind erfindungsgemäß Rinnen angeordnet, wobei Schenkel benachbarter Rinnen über beabstandet zu den Baugruppen angeordneten Platten miteinander verbunden sind. Weiterhin sind im Sinne der Erfindung Kratzbleche mit den Gelenkketten verbunden, wobei die Kratzbleche so ausgebildet sind, dass die Kratzbleche durch die Räume zwischen den ersten Umlenkwalzen mit den darauf angeordneten Bereichen der Filterbänder und den Rinnen sowie zwischen den Platten und den beabstandet dazu angeordneten Bereichen der Baugruppen führbar sind.

Die Baugruppen mit den Filterbändern sind vorteilhafterweise schräg angeordnet, so dass das jeweilig vorgeordnete Filterband über dem nachgeordneten endet. Eine derartige Anordnung führt dazu, dass Feststoffe des Filterkuchens auf das jeweilig nachgeordnete Filterband gelangen. Vom Ende der Reihe der nacheinander angeordneten Filterbänder sind die Feststoffe des Filterkuchens leicht entfernbar. Baugruppen können im Behälter angeordnet sein oder diesen überragen. Wenigstens das letzte Filterband außerhalb des Behälters enden, so dass die Feststoffe einfach aus den Behälter heraustransportiert werden. Im einfachsten Fall können die Feststoffe einfach vom letzten Filterband abfallen. In den Räumen der Baugruppen zwischen den Filterbändern liegt über die Öffnungen der Umlenkwalzen ein Unterdruck an, so dass das zu reinigende Medium durch die Filterbänder gesaugt wird. Mittels der Baugruppen mit den Filterbändern kann so eine große Filteroberfläche zur Reinigung des flüssigen Mediums im Behälter realisiert werden.

Die beabstandet zu den Enden der ersten Umlenkwalzen im zu reinigenden Medium angeordneten Rinnen und die die Schenkel benachbarter Rinnen verbindenden Platten können auch einstückig als so geformte Platte ausgebildet sein.

Die Umlenkwalzen sind über Kettengetriebe mit Gelenkketten miteinander verbunden. Dazu besitzen wenigstens die zweiten Umlenkwalzen Kettenräder. Die Gelenkketten sind über die ersten Umlenkwalzen geführt. In einer Ausführungsform können auch die ersten Umlenkwalzen Kettenräder für die Gelenkketten aufweisen.

Die Filterbänder sind mit den Gelenkketten lösbar verbunden. Die Filterbänder befinden sich so vorteilhafterweise zwischen den angetriebenen Gelenkketten, so
dass der Antrieb und die Synchronisierung der Filterbänder mittels der Gelenkketten erfolgt. Die Krafteinleitungen der Vorschubkräfte erfolgen über Befestigungselemente an den Gelenkketten in die Filterbänder an mehreren Stellen, so dass sich geringe Belastungen der Filterbänder ergeben. Die Belastungen ergeben sich durch die Anzahl und damit der Abstände der Befestigungselemente der Filterbänder. Weiterhin befinden sich Kratzbleche an den Gelenkketten, so dass die Baugruppen jeweils eine Kombination von Bandfilter und Behälter mit Kratzförderer sind.

Die Filterbänder sind vorteilhafterweise lösbar mit den Gelenkketten verbunden. Insbesondere sind weiterhin die Enden der Filterbänder lösbar miteinander verbunden. Die Endenbereiche der Baugruppen und damit die Filterbänder überragen das Medium im Behälter. Weiterhin sind die Filterbänder einzeln angetrieben. Damit können Filterbänder einzeln bei laufenden Filtern des Mediums gewechselt werden. Der Filterprozess des Mediums muss somit zum Wechseln von Filterbändern nicht unterbrochen werden.

Die Einrichtung kann so besonders vorteilhaft zum Reinigen flüssigen Bearbeitungsmediums als Medium verwendet werden. Derartige Bearbeitungen können unter anderem spanende Formgebungen, Umformungen oder Prüfungen an Gegenständen sein. Natürlich kann ein flüssiges Medium an sich ebenfalls gereinigt werden.

Vorteilhafte Ausgestaltungen der Erfindung sind in den folgenden Weiterbildungen und Ausführungsformen aufgeführt. Diese können die Einrichtung zum Reinigen flüssigen Mediums mit Unterdruckbandfiltern einzeln oder in einer Kombination fortbilden.

Die Gelenkketten können in einer Weiterbildung insbesondere Rollenketten sein.

Die Rollenketten können in einer Ausführungsform über Laschen mit den Filterbändern lösbar verbunden sein, wobei die Laschen mit Bolzen der Rollenketten verbunden sind. Die Laschen können insbesondere fingerförmig ausgebildet und so
mit den Filterbändern verbunden sein. Die Lasche ist dazu vorteilhafterweise mit dem Bolzen der Gelenkkette verbunden. Die Lasche kann eben oder im Querschnitt u-fömig ausgebildet sein.

Die lösbaren Verbindungen zwischen den Filterbändern und den Rollenketten sind in Ausführungsformen Klemm- und/oder Schraubenverbindungen.

Die Rollen der Rollenketten können in einer Ausführungsform auf Schienen als Bestandteile der Träger geführte Rollen sein. Die Schienen können dazu einfache Platten sein, auf denen die Rollen abrollen können.

Die Kratzbleche können in Ausführungsformen glatt ausgebildet sein oder Zacken aufweisen. Kratzbleche mit Zacken sind speziell bei der Reinigung von Bearbeitungsmedium der Bearbeitung von Stahl vorteilhaft, bei welcher sich eine aufschwimmende Wolle von Stahlspänen ausbildet. Mit einer wechselnden Anordnung von gezackten und glatten Kratzblechen wird der sich ausbildende Wollteppich aus dem Behälter heraustransportiert.

Die Rinnen können in einer Weiterbildung halbrunde Rinnen sein, so dass die Feststoffe weitestgehend vollständig abtransportierbar sind. Toträume werden weitestgehend vermieden.

Die Innenräume der ersten Umlenkwalzen sind in einer Ausführungsform über einen gereinigtes Medium aufnehmenden Unterdruckbehälter in Verbindung mit der Vakuumpumpe und einer gereinigtes Medium fördernden Einrichtung verbunden. Das zwischen den Filterbändern befindliche gereinigte flüssige Medium wird über den Unterdruckbehälter und der fördernden Einrichtung abgepumpt. Durch das Abpumpen gereinigten Mediums in Verbindung mit dem Unterdruck der Vakuumpumpe ist eine Strömung im Behälter gegeben.

Im Unterdruckbehälter kann sich in einer Ausführungsform wenigstens ein mit einer Steuereinrichtung verbundener Füllstandsensor befinden. Die Steuereinrichtung ist mit der Vakuumpumpe und der gereinigtes Medium fördernden Einrichtung
verbunden. Damit ist ein kontinuierlicher Betrieb des Unterdruckbandfilters möglich. Gleichzeitig kann ein Eindringen von gereinigten Medium in die Vakuumpumpe verhindert werden.

Die letzte Baugruppe kann in einer Ausführungsform sowohl die Oberfläche des zu reinigenden Mediums im Behälter als auch den Behälter seitlich überragen. Wenigstens die letzte Baugruppe kann eine Vorrichtung zur Entfernung von Feststoffen als Verunreinigungen besitzen. Unter der seitlichen Überragung kann sich ein weiterer Behälter zur Aufnahme der von der letzten Baugruppe und/oder mittels der Vorrichtung zur Entfernung von Feststoffen abfallenden Verunreinigungen des zu reinigenden Mediums befinden.

Ein Ausführungsbeispiel der Erfindung ist in den Zeichnungen jeweils prinzipiell dargestellt und wird im Folgenden näher beschrieben.

Es zeigen:
- Fig. 1: eine Einrichtung zum Reinigen flüssigen Mediums mit Unterdruckbandfiltern,
- Fig. 2: eine Schnittdarstellung einer Baugruppe in einer Seitenansicht,
- Fig. 3: eine Rollenkette mit einem Filterband und
- Fig. 4: Endenbereiche von Baugruppen in einem Behälter.

Eine Einrichtung zum Reinigen flüssigen Mediums 2 mit Unterdruckbandfiltern besteht im Wesentlichen aus einem Behälter 1 mit zu reinigendem Medium 2, einer Vakuumpumpe 4, einem Unterdruckbehälter 5, einer gereinigtes Medium 7 fördernden Einrichtung 6, einem weiteren Behälter 9 zur Aufnahme von Verunreinigungen und Baugruppen 3 mit Walzen 11, Filterbändern 10 und Antrieben 16.

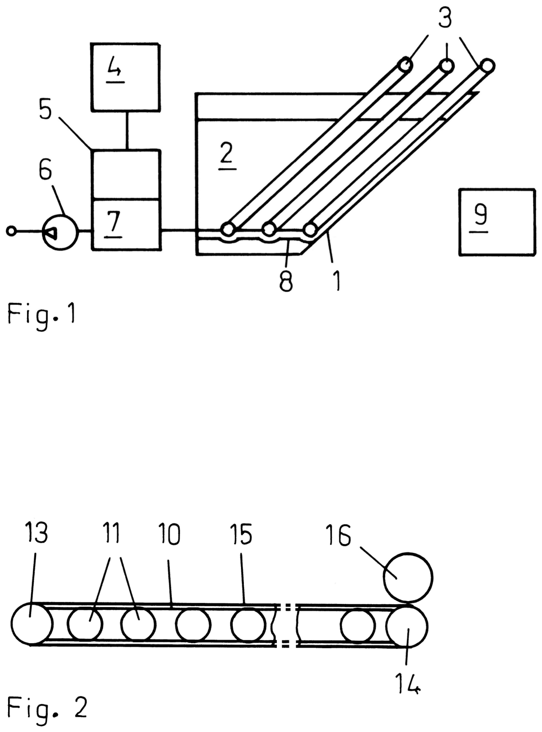

Die Fig. 1 zeigt eine Einrichtung zum Reinigen flüssigen Mediums 2 mit Unterdruckbandfiltern in einer prinzipiellen Darstellung.

Die Baugruppen 3 sind parallel oder überwiegend parallel und schräg beabstandet zueinander angeordnet. Die Baugruppen 3 sind über den Unterdruckbehälter 5, der gereinigtes Medium 7 fördernden Einrichtung 6 verbunden, so dass gereinigtes Medium 7 zur weiteren Verwendung zur Verfügung gestellt wird. Die Baugruppen 3 durchschneiden und überragen die Oberfläche des zu reinigenden Mediums 2 im Behälter 1, wobei sich ein Ende der letzten Baugruppe 3 außerhalb des Behälters 1 befindet. Unter diesem Ende ist der weitere Behälter 9 zur Aufnahme von ausgefilterten Verunreinigungen angeordnet. Der Unterdruckbehälter 5 ist mit der Vakuumpumpe 4 verbunden. Weiterhin befindet sich in diesem wenigstens ein Füllstandsensor, der mit einer Steuereinrichtung verbunden ist, welche darüber hinaus mit der Vakuumpumpe 4 und der gereinigtes Medium fördernden Einrichtung 6 zusammengeschaltet ist. Unter den Baugruppen 3 befindet sich ein Boden 8, welcher der Boden des Behälters 1 oder ein Zwischenboden 8 im Behälter 1 sein kann.

Die Fig. 2 zeigt eine prinzipielle Schnittdarstellung einer Baugruppe 3 in einer Seitenansicht.

Eine Baugruppe 3 als Unterdruckbandfilter besitzt das Filterband 10 auf den in einer Reihe und beabstandet zueinander angeordneten Walzen 11 zwischen Trägern 12, so dass das umlaufende Filterband 10 und die Träger 12 einen Raum begrenzen. Die in Richtung Boden des Behälters 1 weisende und im zu reinigenden Medium 2 angeordnete Walze 11 der Reihe ist als erste Umlenkwalze ein Hohlzylinder mit Öffnungen in ihrer Wand. Der Innenraum dieser ersten Umlenkwalze ist mit der Vakuumpumpe 4 verbunden. Die erste Umlenkwalze 11 kann weiterhin mit ersten Kettenrädern 13 verbunden sein. Die letzte und außerhalb des zu reinigenden Mediums 2 angeordnete Walze 11 der Reihe ist eine zweite Umlenkwalze, die mit Kettenrädern oder zweiten Kettenrädern 14 verbunden ist. Ein mit der zweiten Umlenkwalze verbundenes Kettenrad oder zweites Kettenrad 14 ist mit einem Antrieb 16 verbunden. In einer ersten Ausführungsform sind so die ersten Kettenräder 13 und die zweiten Kettenräder 14 über Gelenkketten 15 miteinander verbunden und bilden so die Kettengetriebe als Kettentriebe aus. In einer zweiten Ausführungsform sind so die Kettenräder und die erste Umlenkwalze über Gelenkketten 15 miteinander verbunden. Dabei sind die Gelenkketten 15 über die zweite Umlenkwalze geführt, so dass Kettengetriebe ausgebildet sind. Die Gelenkketten 15 sind insbesondere Rollenketten 15.

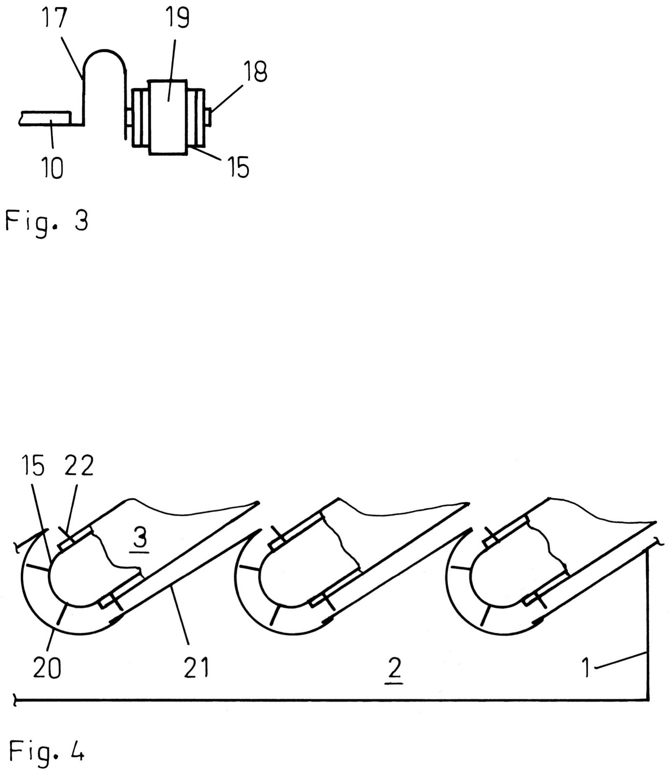

Die Fig. 3 zeigt eine Rollenkette 15 mit einem Filterband 10 in einer prinzipiellen Darstellung.

Jede der Rollenketten 15 ist über Laschen 17 mit den Filterbändern 10 lösbar verbunden. Dazu sind die Laschen beabstandet zueinander mit Bolzen 18 der Rollenketten 15 verbunden. Die lösbaren Verbindungen zwischen den Filterbändern 10 und den Rollenketten 15 sind Klemm- und/oder Schraubenverbindungen. Die Rollen 19 der Rollenketten 15 sind auf Schienen als Bestandteile der Träger 12 geführte Rollen 19.

Die Fig. 4 zeigt Endenbereiche von Baugruppen 3 in einem Behälter 1 in einer prinzipiellen Darstellung.

Beabstandet zu den Enden der ersten Umlenkwalzen sind im zu reinigenden Medium 2 halbrunde Rinnen 20 angeordnet. Schenkel benachbarter Rinnen 20 sind über beabstandet zu den Baugruppen 3 angeordneten Platten 21 miteinander verbunden. Die Rinnen 20 und die Platten 21 bilden den Zwischenboden 8 im Behälter 1 aus oder sind der Boden des Behälters 1. Mit den Rollenketten 15 sind weiterhin Kratzbleche 22 verbunden. Die Kratzbleche 22 sind dabei so ausgebildet, dass die Kratzbleche 22 durch die Räume zwischen den ersten Umlenkwalzen mit den darauf angeordneten Bereichen der Filterbänder 10 und den Rinnen 20 sowie zwischen den Platten 21 und den beabstandet dazu angeordneten Bereichen der Baugruppen 3 führbar sind. Die Kratzbleche 22 sind glatt ausgebildet oder weisen Zacken auf.

In einer Ausführungsform kann die letzte Baugruppe 3, welche sowohl die Oberfläche des zu reinigenden Mediums 2 im Behälter 1 als auch den Behälter 1 seitlich überragt, eine Vorrichtung zur Entfernung von Festtstoffen besitzen. Dazu kann sich unter der seitlichen Überragung ein weiterer Behälter 9 zur Aufnahme der von der letzten Baugruppe 3 und/oder mittels der Vorrichtung zur Entfernung von Verunreinigungen abfallenden Verunreinigungen des zu reinigenden Mediums 2 befinden.

## Patentansprüche

1. Einrichtung zum Reinigen flüssigen Mediums (2) mit Unterdruckbandfiltern, wobei
- die Einrichtung einen Behälter (1) zur Aufnahme des zu reinigenden Mediums (2), Baugruppen (3) mit Filterbändern (10) als Unterdruckbandfilter und wenigstens eine Vakuumpumpe (4) zur Erzeugung eines Unterdrucks besitzt,
- die Baugruppen (3) jeweils in einer Reihe und beabstandet zueinander angeordneten Walzen (11) zum Tragen des Filterbandes (10) zwischen Trägern(12) aufweisen, so dass das jeweilige umlaufende Filterband (10) und die zugeordneten Träger (12) einen Raum begrenzen,
- die Baugruppen (3) parallel oder überwiegend parallel und schräg beabstandet zueinander angeordnet sind,
- die in Richtung Boden des Behälters (1) angeordneten Walzen (11) als erste Umlenkwalzen Hohlzylinder mit Öffnungen in ihren Wandungen sind und
- die Innenräume der ersten Umlenkwalzen als Hohlzylinder mit der Vakuumpumpe (4) verbunden sind,
**dadurch gekennzeichnet,**
- **dass** die Baugruppen (3) die Oberfläche des zu reinigenden Mediums (2) im Behälter (1) überragen,
- **dass** die in Richtung vom zu reinigenden Medium (2) weg weisenden und über der Oberfläche des zu reinigenden Mediums (2) angeordneten Walzen (11) als zweite Umlenkwalzen jeweils an Antriebe (16) als Bestandteile der Baugruppen (3) gekoppelt sind, wobei die zweiten Umlenkwalzen und die Antriebe (16) über der Oberfläche des zu reinigenden Mediums (2) angeordnet sind,
- **dass** die Umlenkwalzen über Kettengetriebe mit Gelenkketten (15) miteinander verbunden sind,
- **dass** die Filterbänder (10) der Baugruppen (3) mit den Gelenkketten (15) lösbar verbunden sind,
- **dass** beabstandet zu den Enden der ersten Umlenkwalzen im zu reinigenden Medium (2) Rinnen (20) angeordnet sind, wobei Schenkel benachbarter Rinnen (20) über beabstandet zu den Baugruppen (3) angeordneten Platten (21) miteinander verbunden sind,
- **dass** Kratzbleche (22) mit den Gelenkketten (15) verbunden sind und
- **dass** die Kratzbleche (22) so ausgebildet sind, dass die Kratzbleche (22) durch die Räume zwischen den ersten Umlenkwalzen mit den darauf angeordneten Bereichen der Filterbänder (10) und den Rinnen (20) sowie zwischen den Platten (21) und den beabstandet dazu angeordneten Bereichen der Baugruppen (3) führbar sind.

2. Einrichtung nach Patentanspruch 1, **dadurch gekennzeichnet, dass** die Gelenkketten (15) Rollenketten (15) sind.

3. Einrichtung nach wenigstens einem der Patentansprüche 1 und 2, **dadurch gekennzeichnet, dass** die Rollenketten (15) über Laschen (17) mit den Filterbändern (10) lösbar verbunden sind, dass die Laschen (17) mit Bolzen (18) der Rollenketten (15) verbunden sind.

4. Einrichtung nach wenigstens einem der Patentansprüche 1 bis 3, **dadurch gekennzeichnet, dass** die lösbaren Verbindungen zwischen den Filterbändern (10) und den Rollenketten (15) Klemm- und/oder Schraubenverbindungen sind.

5. Einrichtung nach wenigstens einem der Patentansprüche 1 bis 4, **dadurch gekennzeichnet, dass** die Rollen (19) der Rollenketten (15) auf Schienen als Bestandteile der Träger (12) geführte Rollen (19) sind.

6. Einrichtung nach wenigstens einem der Patentansprüche 1 bis 5, **dadurch gekennzeichnet, dass** die Kratzbleche (22) glatt ausgebildet sind oder dass die Kratzbleche (22) Zacken aufweisen.

7. Einrichtung nach wenigstens einem der Patentansprüche 1 bis 6, **dadurch gekennzeichnet, dass** die Rinnen (20) halbrunde Rinnen (20) sind.

8. Einrichtung nach wenigstens einem der Patentansprüche 1 bis 7, **dadurch gekennzeichnet, dass** die Innenräume der ersten Umlenkwalzen über einen gereinigtes Medium (7) aufnehmenden Unterdruckbehälter (5) in Verbindung mit der Vakuumpumpe (4) und einer gereinigtes Medium (7) fördernden Einrichtung (6) verbunden sind.

9. Einrichtung nach wenigstens einem der Patentansprüche 1 bis 8, **dadurch gekennzeichnet, dass** sich im Unterdruckbehälter (5) wenigstens ein mit einer Steuereinrichtung verbundener Füllstandsensor befindet und dass die Steuereinrichtung mit der Vakuumpumpe (4) und der gereinigtes Medium (7) fördernden Einrichtung (6) verbunden ist.

10. Einrichtung nach wenigstens einem der Patentansprüche 1 bis 9, **dadurch gekennzeichnet, dass** die letzte Baugruppe (3) sowohl die Oberfläche des zu reinigenden Mediums (2) im Behälter (1) als auch den Behälter (1) seitlich überragt, dass wenigstens die letzte Baugruppe (3) eine Vorrichtung zur Entfernung von Feststoffen besitzt und dass sich unter der seitlichen Überragung ein weiterer Behälter (9) zur Aufnahme der von der letzten Baugruppe (3) und/oder mittels der Vorrichtung zur Entfernung von Feststoffen abfallenden Verunreinigungen des zu reinigenden Mediums (2) befindet.
